# FASCICULE DE BREVET EUROPEEN

(11) **EP 2 950 168 B1**
(45) Date de publication et mention de la délivrance du brevet: **12.10.2016**
(21) Numéro de dépôt: 14170094.8
(22) Date de dépôt: 27.05.2014
(51) Int. Cl.: G04B 19/30

(54) **Jeu d'aiguilles d'affichage lumineuses pour objet portable tel qu'une montre ou un instrument de mesure**
Set aus Leuchtzeigern zum Anzeigen für tragbaren Gegenstand wie Armbanduhr oder Messinstrument
Set of luminous display hands for a portable object such as a watch or a measuring instrument

(43) Date de publication de la demande: 02.12.2015
(73) Titulaire: The Swatch Group Research and Development Ltd., 2074 Marin (CH)
(72) Inventeur: Tortora, Pierpasquale, 2000 Neuchâtel (CH); Fauré, Cédric, 2016 Cortaillod (CH); Springer, Simon, 3007 Bern (CH)
(74) Mandataire: Supper, Marc

(56) Documents cités:
- WO-A1-97/28424
- GB-A- 2 004 065
- GB-A- 2 233 478
- GB-A- 2 421 809
- JP-A- S 567 074
- JP-A- S 567 075
- US-A- 2 072 795

## Description

### Domaine de l'invention

La présente invention concerne un jeu d'aiguilles d'affichage lumineuses pour un objet portable. La présente invention concerne en particulier un jeu d'aiguilles d'affichage lumineuses pour une pièce d'horlogerie telle qu'une montre-bracelet ou un appareil de mesure à affichage analogique.

### Arrière-plan technologique de l'invention

Les aiguilles de montre sont fabriquées avec des tolérances serrées. Le trou de l'aiguille pour le passage du canon est en général réalisé avec des précisions de l'ordre du micromètre. Cette précision est nécessaire pour pouvoir garantir un chassage correct de l'aiguille sur son axe. Les aiguilles sont en général réalisées à partir d'une feuille métallique dont l'épaisseur n'excède pas quelques centaines de micromètre. Pour réduire l'épaisseur de la montre, la distance entre les aiguilles et la glace de la montre n'excède habituellement pas un millimètre, tandis que la distance qui sépare deux aiguilles coaxiales, par exemple l'aiguille des heures et celle des minutes, est de l'ordre d'une fraction de millimètre.

Les aiguilles d'une montre jouent bien sûr un rôle fonctionnel, par exemple indiquer l'heure courante, mais elles jouent également un rôle décoratif en contribuant largement à l'aspect esthétique de la montre qu'elles équipent. A cet effet, les aiguilles doivent répondre à des critères stricts. Une technique bien connue dans le monde horloger pour permettre aux aiguilles d'être visibles dans le noir consiste à revêtir la surface des aiguilles orientée du côté de l'utilisateur d'une couche de matériau phosphorescent. Un exemple d'un tel matériau est un pigment photoluminescent non radioactif commercialisé par la société japonaise Nemoto & Co., Ltd. sous la marque enregistrée Super-Luminova®. Ce pigment peut aussi être utilisé pour revêtir les index horaires du cadran de la montre. De jour, la couche de matériau phosphorescent absorbe l'énergie lumineuse. Cette énergie lumineuse est ensuite restituée de nuit par la couche de matériau phosphorescent sous forme de rayonnement lumineux. Cette technique d'illumination des aiguilles d'une montre est assez commode dans la mesure où le fonctionnement de la couche de matériau phosphorescent est totalement passif et ne nécessite donc, pour son fonctionnement, l'actionnement d'aucun dispositif mécanique ou électrique, ni prélèvement d'énergie qui serait fournie par la montre. Cette technique d'illumination des aiguilles d'une montre présente toutefois également certains inconvénients au premier rang desquels on peut citer le fait que la couche de matériau phosphorescent nécessite d'être préalablement éclairée par une source de lumière avant de pouvoir émettre de l'énergie lumineuse. De même, le phénomène de réémission de lumière par effet de phosphorescence est limité dans le temps, de sorte qu'au fur et à mesure que la couche phosphorescente relâche l'énergie lumineuse qu'elle a stockée, sa luminosité décroît. Les aiguilles revêtues d'une couche de matériau phosphorescent n'ont donc pas un aspect constant. Enfin, la gamme de matériaux phosphorescents disponibles sur le marché est limitée, de sorte que la plupart des montres dans lesquelles de tels matériaux sont utilisés finissent par avoir le même aspect dans l'obscurité.

A titre de variante de la couche phosphorescente, on peut envisager d'utiliser des techniques d'illumination actives dans lesquelles des sources de lumière discrètes sont utilisées pour éclairer les aiguilles d'une montre. A titre d'exemple, il est possible d'intégrer dans la montre une source de lumière ultraviolette, de façon que la radiation émise vienne exciter la matière fluorescente qui recouvre les aiguilles. Un tel mode de réalisation présente cependant également des inconvénients. D'une part, les sources de lumière ultraviolettes, également appelées sources de lumière noire, émettent une certaine quantité de lumière visible, de sorte que l'utilisateur est susceptible de percevoir un halo de lumière à l'endroit où la source de lumière est implantée. D'autre part, étant donné que les aiguilles sont mobiles par rapport à la source de lumière ultraviolette, elles ne reçoivent pas toujours la même quantité de lumière ultraviolette, de sorte que leur luminosité peut varier. Un troisième inconvénient réside dans le fait que le rendement de la conversion entre la lumière visible et le rayonnement ultraviolet est médiocre.

Le document WO 97/28424 divulgue un jeu d'aiguilles d'affichage lumineuses pour une montre dans lequel est logée une source d'alimentation en énergie électrique, le jeu d'aiguilles d'affichage lumineuses comprenant au moins une première et une seconde aiguille d'affichage lumineuse superposées munies chacune d'un trou pour le passage d'un axe d'entraînement, l'axe d'entraînement de la seconde aiguille d'affichage lumineuse étant disposé concentriquement à l'intérieur de l'axe d'entraînement de la première aiguille, chacune des première et seconde aiguilles d'affichage lumineuses portant une première, respectivement une seconde source de lumière, les première et seconde sources de lumière comprenant chacune un premier et un second pôle, le premier pôle de la première source de lumière étant relié électriquement à une première borne de la source d'alimentation via l'axe d'entraînement de la première aiguille d'affichage lumineuse, le second pôle de la première source de lumière étant relié au premier pôle de la seconde source de lumière via une pièce de contact qui assure la continuité électrique entre la première et la seconde aiguille d'affichage lumineuse, et le second pôle de la seconde source de lumière étant relié à la seconde borne de la source d'alimentation via l'axe d'entraînement de la seconde aiguille d'affichage lumineuse. Mais dans l'objet divulgué dans ce document, une des borne de la source de lumière de la première aiguille doit être reliée à la source d'énergie via une partie autre que l'axe d'entraînement, puisque la deuxième borne est indirectement (via la deuxième aiguille) déjà reliée à l'axe. Il n'est donc pas possible d'obtenir un montage en série.

### Résumé de l'invention

La présente invention a pour but de remédier aux inconvénients susmentionnés ainsi qu'à d'autres encore en procurant un jeu d'aiguilles d'affichage lumineuses pouvant être illuminées à la demande de l'utilisateur, selon une grande variété de couleurs et en respectant les contraintes dimensionnelles et esthétiques auxquelles ces aiguilles sont soumises.

A cet effet, la présente invention concerne un jeu d'aiguilles d'affichage lumineuses pour un objet portable dans lequel est logée une source d'alimentation en énergie électrique, le jeu d'aiguilles d'affichage lumineuses comprenant au moins une première et une seconde aiguille d'affichage lumineuse superposées munies chacune d'un trou pour le passage d'un axe d'entraînement, l'axe d'entraînement de la seconde aiguille d'affichage lumineuse étant disposé concentriquement à l'intérieur de l'axe d'entraînement de la première aiguille avec interposition d'une couche isolante entre les deux axes d'entraînement, chacune des première et seconde aiguilles d'affichage lumineuses portant une première, respectivement une seconde source de lumière, les première et seconde sources de lumière comprenant chacune un premier et un second pôle, le premier pôle de la première source de lumière étant relié électriquement à une première borne de la source d'alimentation via l'axe d'entraînement de la première aiguille d'affichage lumineuse, le second pôle de la première source de lumière étant relié au premier pôle de la seconde source de lumière via une pièce de contact qui assure la continuité électrique entre la première et la seconde aiguille d'affichage lumineuse, et le second pôle de la seconde source de lumière étant relié à la seconde borne de la source d'alimentation via l'axe d'entraînement de la seconde aiguille d'affichage lumineuse.

Grâce à ces caractéristiques, la présente invention procure un jeu d'aiguilles montées concentriquement et qui possèdent chacune une source de lumière pour leur illumination. Ce résultat remarquable est atteint grâce au fait que l'un des pôles de l'une des sources de lumière est relié à l'un des pôles de l'autre source de lumière grâce au contact électrique entre les deux aiguilles, ce qui permet d'utiliser les axes d'entraînement des deux aiguilles pour la connexion électrique des sources de lumière aux bornes de la source d'alimentation. Par ailleurs, du fait que l'on utilise les aiguilles pour l'acheminement du signal électrique, on obtient un montage d'une grande simplicité qui est donc moins onéreux et plus fiable.

### Brève description des figures

D'autres caractéristiques et avantages de l'invention ressortiront plus clairement de la description détaillée qui suit d'un mode de réalisation de l'invention, cet exemple étant donné à titre purement illustratif et non limitatif seulement en liaison avec le dessin annexé sur lequel :
- les figures 1 et 2 sont des vues respectivement de dessus et de dessous à l'état assemblé du jeu d'aiguilles d'affichage lumineuses selon l'invention ;
- les figures 3 et 4 sont des vues respectivement de dessus et de dessous à l'état dissocié du jeu d'aiguilles d'affichage lumineuses selon l'invention ;
- la figure 5 est une vue en coupe à grande échelle du moyeu central du jeu d'aiguilles d'affichage lumineuses selon l'invention ;
- les figures 6 et 7 sont des vues respectivement de dessus et de dessous d'une variante de réalisation du jeu d'aiguilles d'affichage lumineuses selon l'invention ;
- la figure 8 est une vue de dessous à l'état dissocié du jeu d'aiguilles d'affichage lumineuses des figures 6 et 7, et
- les figures 9A et 9B sont des vues respectivement de dessus et de dessous d'une aiguille d'affichage lumineuse selon l'invention.

### Description détaillée d'un mode de réalisation de l'invention

La présente invention procède de l'idée générale inventive qui consiste à éclairer une aiguille d'affichage pour un objet portable tel qu'une montre-bracelet ou bien un instrument de mesure au moyen d'une source de lumière de type ponctuel, préférentiellement une diode électroluminescente. Une telle aiguille lumineuse d'affichage présente plusieurs avantages : son aspect ne s'altère pas avec le temps qui s'écoule, et en raison de la large gamme de diodes électroluminescentes existantes, il est possible de personnaliser l'aspect de l'aiguille et donc l'aspect de l'objet portable qui en est équipé, ce qui permet de se distinguer de la concurrence. Par ailleurs, selon un autre avantage de l'invention, la source de lumière est agencée sur l'aiguille qu'elle sert à utiliser et non pas, par exemple, dans l'axe d'entraînement de l'aiguille, ce qui simplifie considérablement la conception d'une telle aiguille de même que son branchement électrique à la source d'énergie électrique logée dans le bâti de l'objet portable.

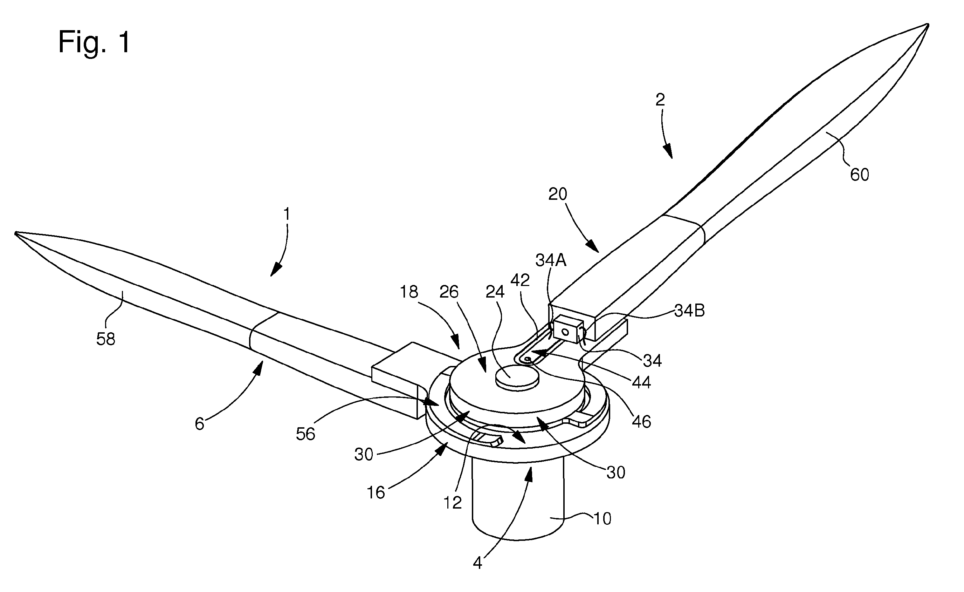

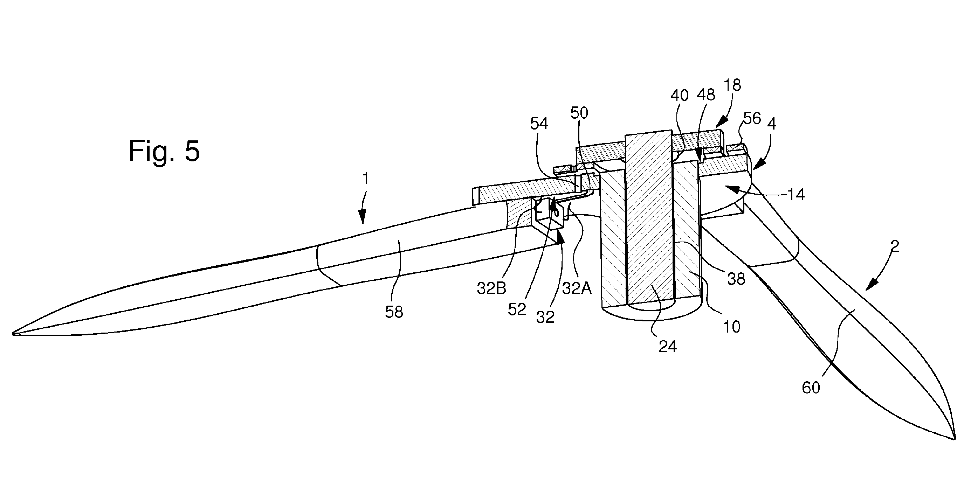

Dans l'exemple représenté aux figures 1 à 5, le jeu d'aiguilles selon l'invention comprend une première et une seconde aiguille d'affichage lumineuse, respectivement 1 et 2. La première aiguille d'affichage lumineuse 1 est formée d'un premier élément annulaire 4 prolongé par une partie 6 qui s'étend sensiblement rectilignement. Le premier élément annulaire 4 présente en son centre un trou 8 pour le passage d'un axe d'entraînement 10 de la première aiguille d'affichage lumineuse 1. Le premier élément annulaire 4 est doté d'une portion de surface supérieure 12 dirigée du côté d'un observateur, et d'une portion de surface inférieure 14 opposée à la portion de surface supérieure 12. Les portions de surface supérieure 12 et inférieure 14 du premier élément annulaire 4 sont reliées entre elles tout le long de leur périmètre par une surface latérale 16. Selon une caractéristique de l'invention qui sera décrite plus en détail ci-après, le premier élément annulaire 4 est revêtu d'une couche d'un matériau électriquement conducteur sur ses portions de surface supérieure 12 et inférieure 14 ainsi que dans le trou 8 dans lequel est engagé l'axe d'entraînement 10.

De manière analogue à la première aiguille d'affichage lumineuse 1, la seconde aiguille d'affichage lumineuse 2 est formée d'un second élément annulaire 18 prolongé par une partie 20 qui s'étend sensiblement rectilignement. Le second élément annulaire 18 de la seconde aiguille d'affichage lumineuse 2 présente en son centre un trou 22 pour le passage d'un axe d'entraînement 24 disposé concentriquement à l'intérieur de l'axe d'entraînement 10 de la première aiguille d'affichage lumineuse 1. Le second élément annulaire 18 est doté d'une portion de surface supérieure 26 dirigée du côté d'un observateur, et d'une portion de surface inférieure 28 opposée à la portion de surface supérieure 26. Les portions de surface supérieure 26 et inférieure 28 du second élément annulaire 18 sont reliées entre elles tout le long de leur périmètre par une surface latérale 30. Selon une caractéristique de l'invention qui sera décrite plus en détail ci-après, le second élément annulaire 18 est également revêtu d'une couche d'un matériau électriquement conducteur sur ses portions de surface supérieure 26 et inférieure 28 ainsi que dans le trou 22 dans lequel est engagé l'axe d'entraînement 24.

La première aiguille d'affichage lumineuse 1 porte une première source de lumière 32 et la seconde aiguille d'affichage lumineuse 2 porte une seconde source de lumière 34. Les première et seconde sources de lumière 32 et 34 sont des sources de lumière de type ponctuel telles que des diodes électroluminescentes. Les première et seconde sources de lumière 32 et 34 comprennent des premier et second pôles, respectivement 32A, 32B et 34A, 34B, pour leur connexion électrique à une source d'alimentation 36 en énergie électrique logée à l'intérieur d'un bâti par exemple d'une montre-bracelet équipée du jeu d'aiguilles d'affichage lumineuses 1, 2 selon l'invention. La source d'alimentation 36 en énergie électrique peut être au choix une pile ou une batterie rechargeable. Etant donné que les sources de lumière 32, 34 dont il est question ici ont typiquement une consommation électrique de l'ordre de quelques dizaines à quelques centaines de microampères, on peut même envisager de les alimenter au moyen d'un barillet de montre ou bien d'une génératrice ou d'une dynamo actionnée par l'utilisateur par exemple au moyen d'un bouton-poussoir prévu sur l'objet portable. L'intérêt d'une telle solution réside dans le fait qu'elle permet d'éviter toute solution de stockage de l'énergie reposant sur des phénomènes physicochimiques. On comprendra d'autre part que, même en utilisant des sources de lumière 1, 2 dont la consommation est aussi faible que quelques dizaines de microampères, l'éclairage obtenu est déjà équivalent à celui des matériaux phosphorescents dont sont habituellement revêtues les aiguilles d'affichage lumineuses.

Le premier pôle 32A de la première source de lumière 32 est relié à la source d'alimentation 36 via l'axe d'entraînement 10 de la première aiguille 1, et le second pôle 32B de la première source de lumière 32 est relié au premier pôle 34A de la seconde source de lumière 34 selon des modalités qui seront décrites en détail ci-dessous. Quant au second pôle 34B de la seconde source de lumière 34, il est relié à la source d'alimentation 36 via l'axe d'entraînement 24 de la seconde aiguille d'affichage lumineuse 2. A cet effet, les axes d'entraînement 10 et 24 des première et seconde aiguilles d'affichage lumineuses 1 et 2 doivent être conducteurs de l'électricité et doivent être isolés électriquement l'un par rapport à l'autre par interposition d'une couche isolante 38.

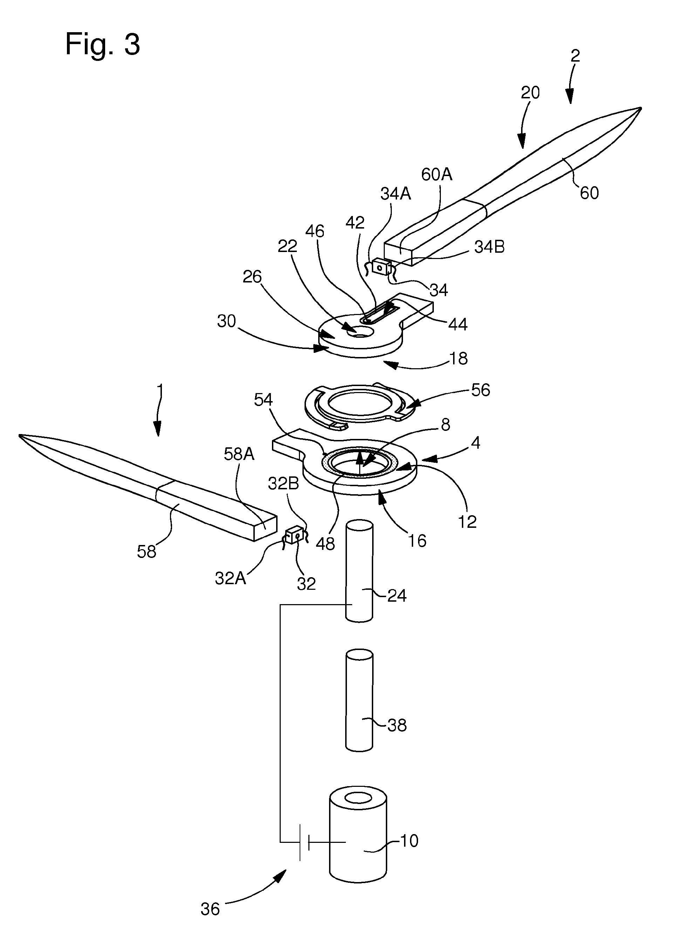

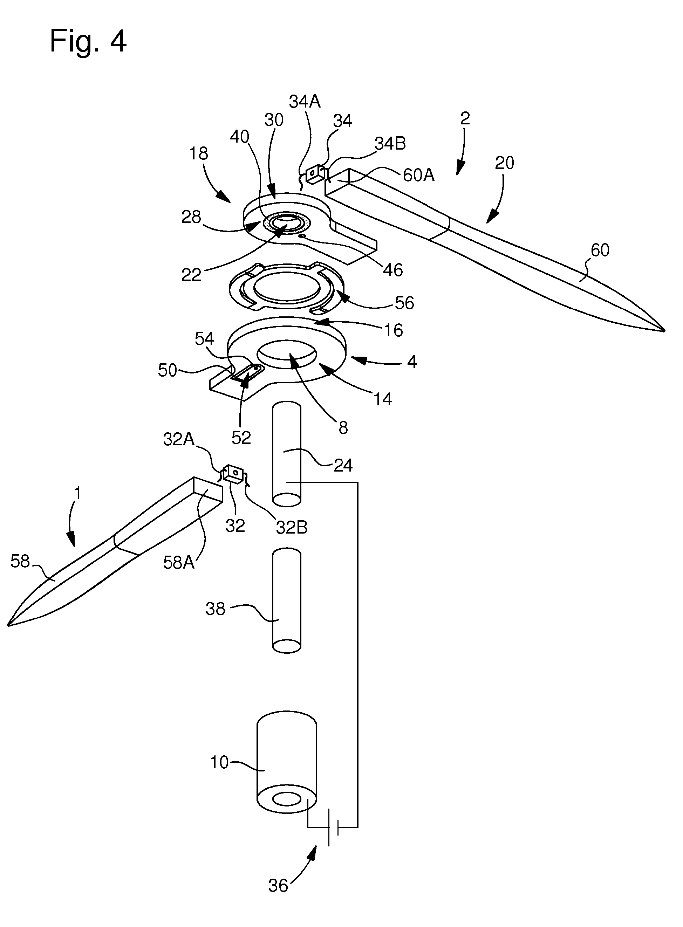

Comme mentionné ci-dessus, les premier et second éléments annulaires 4 et 18 sont revêtus sur leurs portions de surface supérieure et inférieure d'une couche d'un matériau électriquement conducteur. Plus précisément, l'axe d'entraînement 24 est chassé dans un trou 22 métallisé ménagé dans le second élément annulaire 18. Par conséquent, la portion de surface supérieure 26 du second élément annulaire 18 est portée au même potentiel électrique que l'axe d'entraînement 24. Par contre (voir figure 4), une tranchée continue 40 ménagée dans la portion de surface inférieure 28 du second élément annulaire 18 et rendue électriquement isolante par enlèvement local du matériau électriquement conducteur entoure l'axe d'entraînement 24, de façon que la portion de surface inférieure 28 soit électriquement isolée de l'axe d'entraînement 24. De même (voir figures 1 et 3), une tranchée continue 42 qui se referme sur elle-même et qui est rendue isolante de la même façon que la tranchée continue 40 est ménagée dans la portion de surface supérieure 26 du second élément annulaire 18, de manière à créer un îlot 44 électriquement isolé du reste de la portion de surface supérieure 26. Un via ou trou traversant 46 métallisé percé dans l'épaisseur du second élément annulaire 18 permet de relier électriquement entre eux l'îlot 44 ménagé dans la portion de surface supérieure 26 et la portion de surface inférieure 28. On notera que les tranchées 40, 42 sont typiquement obtenues par gravure photolithographique. D'autres techniques d'enlèvement de matière telles que l'ablation mécanique de la matière ou au moyen d'un faisceau laser peuvent cependant être envisagées.

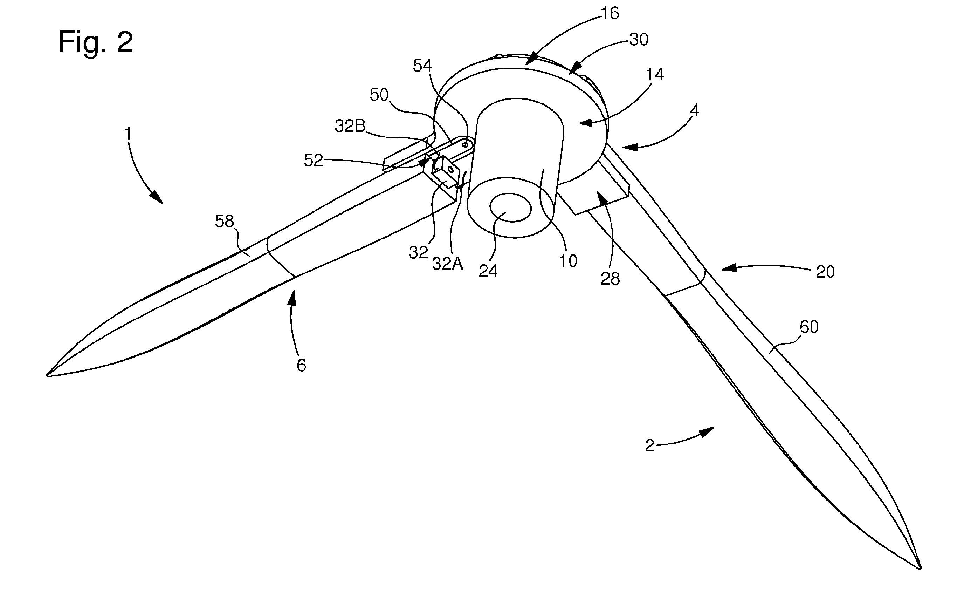

De manière analogue, l'axe d'entraînement 10 est chassé dans un trou 8 métallisé ménagé dans le premier élément annulaire 4. Par conséquent, la portion de surface inférieure 14 du premier élément annulaire 4 est portée au même potentiel électrique que l'axe d'entraînement 10. Par contre (voir figure 3), une tranchée continue 48 ménagée dans la portion de surface supérieure 12 du premier élément annulaire 4 et rendue électriquement isolante par enlèvement local du matériau électriquement conducteur entoure l'axe d'entraînement 10, de façon que la portion de surface supérieure 12 soit électriquement isolée de l'axe d'entraînement 10. De même (voir figures 2 et 4), une tranchée continue 50 qui se referme sur elle-même et qui est rendue isolante de la même façon que la tranchée continue 48 est ménagée dans la portion de surface inférieure 14 du premier élément annulaire 4, de manière à créer un îlot 52 électriquement isolé du reste de la portion de surface inférieure 14. Un via ou trou traversant 54 métallisé percé dans l'épaisseur du premier élément annulaire 4 permet de relier électriquement entre eux l'îlot 52 ménagé dans la portion de surface inférieure 14 et la portion de surface supérieure 12.

Enfin, la portion de surface inférieure 28 du second élément annulaire 18 est mise en contact avec la portion de surface supérieure 12 du premier élément annulaire 4 via une pièce de contact 56 électriquement conductrice et mécaniquement élastique disposée entre les première et seconde aiguilles d'affichage lumineuses 1 et 2 et centrée sur l'axe d'entraînement 10. L'îlot 44 ménagé dans la portion de surface supérieure 26 est donc relié électriquement à la portion de surface supérieure 12 du premier élément annulaire 4, cette portion de surface supérieure 12 étant elle-même électriquement reliée à l'îlot 52 ménagé dans la portion de surface inférieure 14 du premier élément annulaire 4.

Conformément à l'invention, le premier pôle 32A de la première source de lumière 32 est relié électriquement à une première borne de la source d'alimentation 36 via l'axe d'entraînement 10 de la première aiguille d'affichage lumineuse 1. A cet effet, le premier pôle 32A est relié, par exemple par une technique de câblage par fil bien connue sous sa terminologie anglo-saxonne de « wire bonding », à la portion de surface inférieure 14 du premier élément annulaire 4. Quant au second pôle 32B de la première source de lumière 32, il est relié au premier pôle 34A de la seconde source de lumière 34 via la pièce de contact 56 qui assure la continuité électrique entre la première et la seconde aiguille d'affichage lumineuse 1, 2. Pour cela, le second pôle 32B de la première source de lumière 32 est relié à l'îlot 52 ménagé dans la portion de surface inférieure 14 du premier élément annulaire 4. Par l'intermédiaire du via métallisé 54 percé dans l'épaisseur du premier élément annulaire 4, l'îlot 52 est relié électriquement à la portion de surface supérieure 12 du premier élément annulaire 4, cette portion de surface supérieure 12 étant elle-même reliée grâce à la pièce de contact 56 à la portion de surface inférieure 28 du second élément annulaire 18. La portion de surface inférieure 28 du second élément annulaire 18 est elle-même reliée à l'îlot 44 ménagé dans la portion de surface supérieure 26 du second élément annulaire 18 par l'intermédiaire du via métallisé 46. Finalement, le premier pôle 34A de la seconde source de lumière 34 est électriquement connecté à l'îlot 44 ménagé dans la portion de surface supérieure 26 du second élément annulaire 18. Quant au second pôle 34B de la seconde source de lumière 34, il est relié à la seconde borne de la source d'alimentation 36 via l'axe d'entraînement 24. Pour cela, le second pôle 34B est connecté électriquement à la portion de surface supérieure 26 du second élément annulaire 18.

Dans le mode de réalisation représenté aux figures 1 à 5, les première et seconde aiguilles d'affichage lumineuses 1, 2 se composent chacune d'une plaque de circuit imprimé utilisée pour former les premier et second éléments annulaires, respectivement 4 et 18, et d'un guide de lumière, respectivement 58 et 60. Les plaques de circuit imprimé sont métallisées dessous et dessus, mais pas sur la tranche. Le guide de lumière 58 est fixé sous le premier élément annulaire 4 pour former la première aiguille d'affichage lumineuse 1, et le guide de lumière 60 est fixé sur le second élément annulaire 18 pour former la seconde aiguille d'affichage lumineuse 2. Ce mode de réalisation est préféré afin d'éviter que les guides de lumière 58 et 60 ne se gênent mutuellement lors de la rotation des aiguilles d'affichage lumineuses 1 et 2. Les première et seconde sources de lumière 32 et 34 sont fixées, par exemple par collage, sur une face d'entrée 58A, 60A des guides de lumière 58 et 60. La lumière produite par les sources de lumière 32, 34 se propage à l'intérieur des guides de lumière 58, 60 par couplage optique.

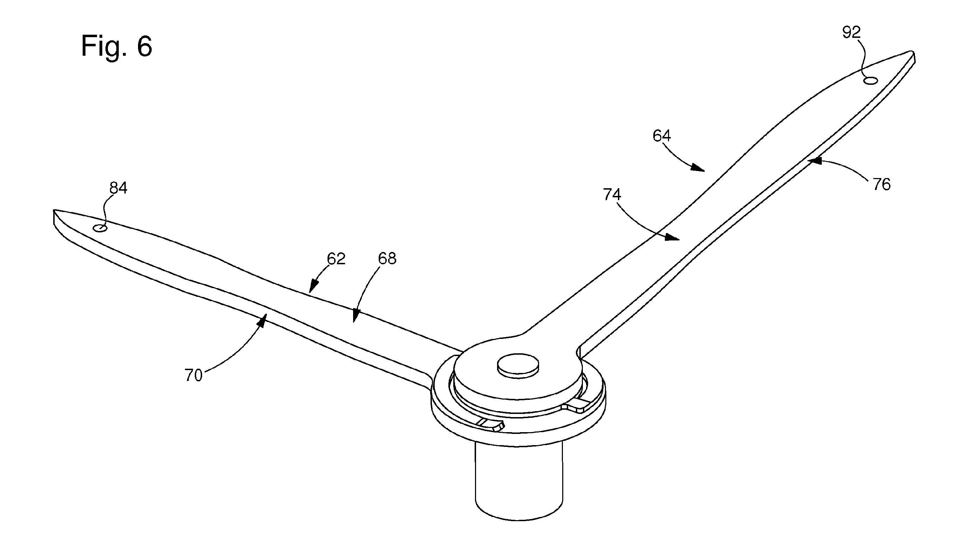

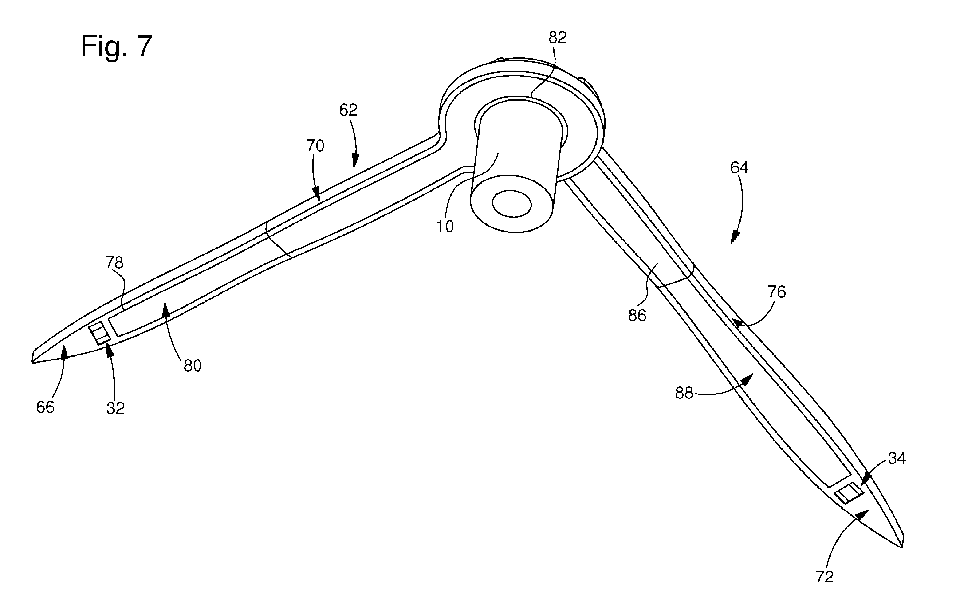

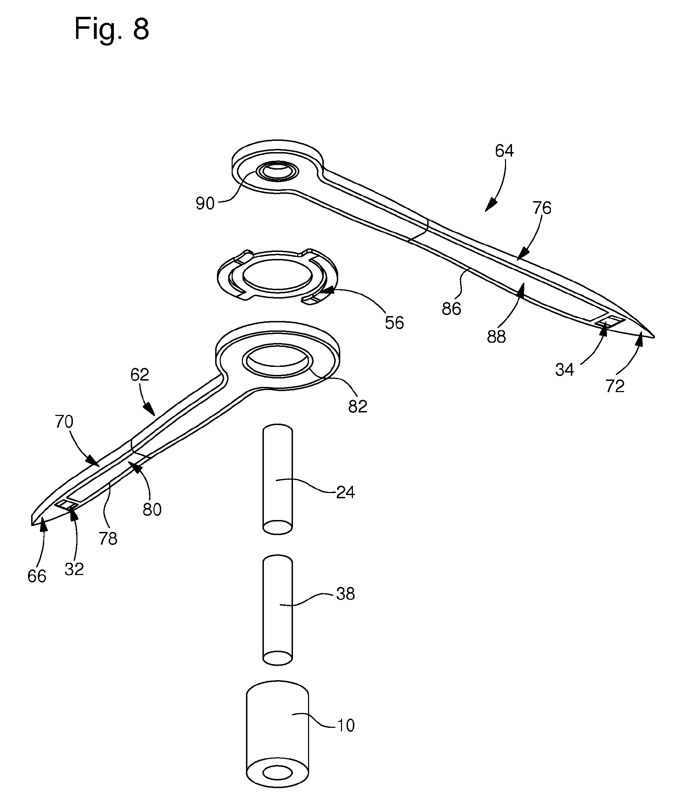

Dans un autre mode de réalisation également illustré sur les figures 6 à 8, les première et seconde aiguilles d'affichage lumineuses 62, 64 sont réalisées d'un seul tenant en un matériau transparent, semi-transparent ou translucide tel que du plastique, du quartz, de la silice, du saphir, du rubis ou autre. La première aiguille d'affichage lumineuse 62 comprend une portion de surface inférieure 66 et une portion de surface supérieure 68 reliée à la portion de surface inférieure 66 par une surface latérale 70. De même, la seconde aiguille d'affichage lumineuse 64 comprend une portion de surface inférieure 72 et une portion de surface supérieure 74 reliée à la portion de surface inférieure 74 par une surface latérale 76. Les première et seconde aiguilles d'affichage lumineuses 62, 64 sont métallisées sur toutes leurs surfaces.

Une tranchée continue 78 ménagée dans la portion de surface inférieure 66 de la première aiguille d'affichage lumineuse 62 et rendue électriquement isolante par enlèvement local du matériau électriquement conducteur permet de créer un îlot 80 électriquement isolé du reste de la portion de surface inférieure 66. La portion de surface inférieure 66 restante est électriquement connectée à la portion de surface supérieure 68 via la surface latérale 70 de la première aiguille d'affichage lumineuse 62. Une tranchée continue 82 ménagée dans l'îlot 80 et rendue électriquement isolante par enlèvement local du matériau électriquement conducteur entoure l'axe d'entraînement 10, de façon que l'îlot 80 soit électriquement isolé de l'axe d'entraînement 10. La source de lumière 32 est fixée sous la surface de l'aiguille d'affichage lumineuse 62, vers l'extrémité libre de cette dernière. Un trou 84 percé au voisinage du bout de l'aiguille 62 permet à la lumière produite par la source de lumière 32 de s'échapper vers le haut en direction de l'observateur.

De manière identique, une tranchée continue 86 ménagée dans la portion de surface inférieure 72 de la seconde aiguille d'affichage lumineuse 64 et rendue électriquement isolante par enlèvement local du matériau électriquement conducteur permet de créer un îlot 88 électriquement isolé du reste de la portion de surface inférieure 72. La portion de surface inférieure 72 restante est électriquement connectée à la portion de surface supérieure 74 via la surface latérale 76 de la seconde aiguille d'affichage lumineuse 64. Une tranchée continue 90 ménagée dans l'îlot 88 et rendue électriquement isolante par enlèvement local du matériau électriquement conducteur entoure l'axe d'entraînement 24, de façon que l'îlot 88 soit électriquement isolé de l'axe d'entraînement 24. La source de lumière 32 est fixée sous la surface de l'aiguille d'affichage lumineuse 62, vers l'extrémité libre de cette dernière. Un trou 92 percé au voisinage du bout de l'aiguille 64 permet à la lumière produite par la source de lumière 34 de s'échapper vers le haut en direction de l'observateur.

L'agencement décrit ci-dessus permet avantageusement de s'affranchir des vias.

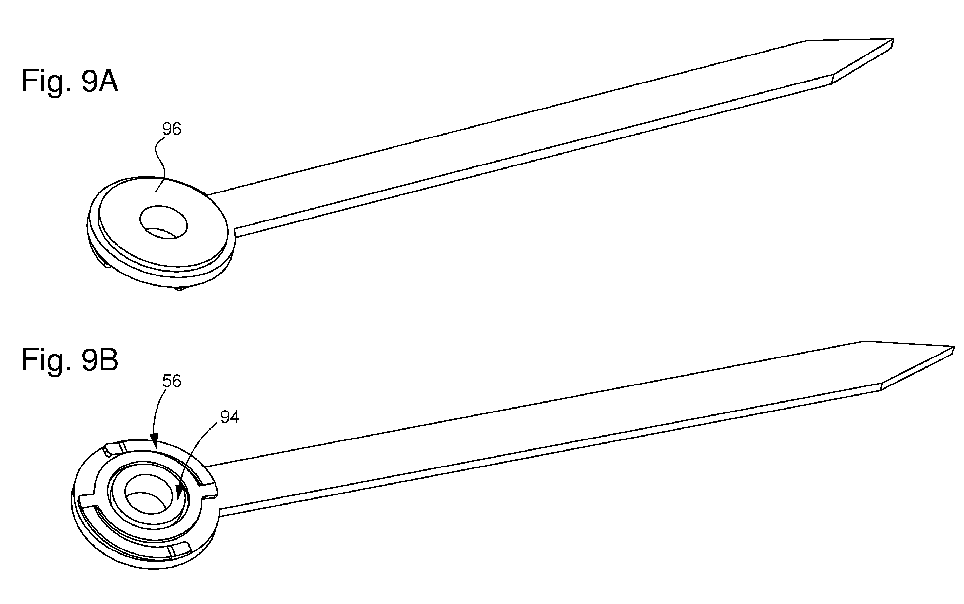

Il va de soi que la présente invention n'est pas limitée aux modes de réalisation qui viennent d'être décrits et que diverses modifications et variantes simples peuvent être envisagées par l'homme du métier sans sortir du cadre de l'invention tel que défini par les revendications annexées. Ainsi, comme illustré aux figures 9A et 9B qui sont des vues respectivement de dessus et de dessous d'une aiguille d'affichage lumineuse selon l'invention, il est envisageable de chasser l'aiguille sur son axe d'entraînement via une portion de tube 94 électriquement conducteur munie d'une collerette 96 par laquelle la portion de tube 94 prend appui sur l'aiguille. La portion de tube 94 est chassée dans le trou de l'aiguille, et l'axe d'entraînement est chassé dans la portion de tube 94. Selon une autre variante avantageuse de l'invention, les sources de lumière 32, 34 sont fixées sur la surface supérieure des aiguilles d'affichage lumineuses 62, 64. Du fait que les deux aiguilles d'affichage lumineuses ne sont pas de même longueur, les sources de lumière 32, 34 ne risquent à aucun moment d'entrer en collison.

### Nomenclature

Première aiguille d'affichage lumineuse 1
Seconde aiguille d'affichage lumineuse 2
Elément annulaire 4
Partie 6 qui s'étend sensiblement rectilignement
Trou 8
Axe d'entraînement 10
Portion de surface supérieure 12
Portion de surface inférieure 14
Surface latérale 16
Elément annulaire 18
Partie 20 qui s'étend sensiblement rectilignement
Trou 22
Axe d'entraînement 24
Portion de surface supérieure 26
Portion de surface inférieure 28
Surface latérale 30
Première source de lumière 32
Premier et second pôles 32A, 32B
Seconde source de lumière 34
Premier et second pôles 34A, 34B
Source d'alimentation en énergie électrique 36
Couche isolante 38
Tranchée continue 40
Tranchée continue 42
Ilot 44
Via métallisé 46
Tranchée continue 48
Tranchée continue 50
Ilot 52
Via métallisé 54
Pièce de contact 56
Guide de lumière 58, 60
Première aiguille d'affichage lumineuse 62
Seconde aiguille d'affichage lumineuse 64
Portion de surface inférieure 66
Portion de surface supérieure 68
Surface latérale 70
Portion de surface inférieure 72
Portion de surface supérieure 74
Surface latérale 76
Tranchée continue 78
Ilot 80
Tranchée continue 82
Trou 84
Tranchée continue 86
Ilot 88
Tranchée continue 90
Trou 92
Portion de tube 94
Collerette 96

## Revendications

1. Jeu d'aiguilles d'affichage lumineuses pour un objet portable dans lequel est logée une source d'alimentation (36) en énergie électrique, le jeu d'aiguilles d'affichage lumineuses comprenant au moins une première et une seconde aiguille d'affichage lumineuse (1, 2) superposées munies chacune d'un trou (8, 22) pour le passage d'un axe d'entraînement (10, 24), l'axe d'entraînement (24) de la seconde aiguille d'affichage lumineuse (2) étant disposé concentriquement à l'intérieur de l'axe d'entraînement (10) de la première aiguille (1) avec interposition d'une couche isolante (38) entre les deux axes d'entraînement (10, 24), chacune des première et seconde aiguilles d'affichage lumineuses (1, 2) portant une première, respectivement une seconde source de lumière (32, 34), les première et seconde sources de lumière (32, 34) comprenant chacune un premier et un second pôle (32A, 32B ; 34A, 34B), le premier pôle (32A) de la première source de lumière (32) étant relié électriquement à une première borne de la source d'alimentation (36) via l'axe d'entraînement (10) de la première aiguille d'affichage lumineuse (1), le second pôle (32B) de la première source de lumière (32) étant relié au premier pôle (34A) de la seconde source de lumière (34) via une pièce de contact (56) qui assure la continuité électrique entre la première et la seconde aiguille d'affichage lumineuse (1, 2), et le second pôle (34B) de la seconde source de lumière (34) étant relié à la seconde borne de la source d'alimentation (36) via l'axe d'entraînement (24) de la seconde aiguille d'affichage lumineuse (2).

2. Jeu d'aiguille d'affichage lumineuses selon la revendication 1, **caractérisé en ce que** la pièce de contact (56) est centrée sur l'axe d'entraînement (10).

3. Jeu d'aiguilles d'affichage lumineuses selon l'une quelconque des revendications 1 ou 2, **caractérisé en ce que** chacune des première et seconde aiguilles d'affichage lumineuses (1 ; 2) est formée d'un premier, respectivement d'un second élément annulaire (4 ; 18) prolongé par une partie (6 ; 20) qui s'étend depuis une extrémité proximale vers une extrémité distale, les premier, respectivement second éléments annulaires (4 ; 18) présentant chacun en leur centre un trou (8 ; 22) pour le passage de l'axe d'entraînement (10 ; 24) de la première, respectivement la seconde aiguille d'affichage lumineuse (1 ; 2), les premier et second éléments annulaires (4 ;18) étant chacun doté d'une portion de surface supérieure (12 ; 26) dirigée du côté d'un observateur, et d'une portion de surface inférieure (14; 28) opposée à la portion de surface supérieure (12 ; 26), les portions de surface supérieure (12; 26) et inférieure (14 ; 28) des premier et second éléments annulaires (4 ; 18) étant reliées entre elles par une surface latérale (16 ; 30), les portions de surface supérieure (12 ; 26) et inférieure (14; 28) ainsi que le trou (8 ; 22) des premier et second éléments annulaires (4 ; 18) étant revêtus d'une couche d'un matériau électriquement conducteur.

4. Jeu d'aiguilles d'affichage lumineuses selon la revendication 3, **caractérisé en ce que** la portion de surface supérieure (26) du second élément annulaire (18) est portée à un même potentiel électrique que l'axe d'entraînement (24) de la seconde aiguille d'affichage lumineuse (2), une tranchée continue (40) ménagée dans la portion de surface inférieure (28) du second élément annulaire (18) et électriquement isolante entourant l'axe d'entraînement (24), de façon à isoler électriquement la portion de surface inférieure (28) de l'axe d'entraînement (24), une tranchée continue (42) électriquement isolante étant ménagée dans la portion de surface supérieure (26) du second élément annulaire (18), de manière à créer un îlot (44) électriquement isolé du reste de la portion de surface supérieure (26), un trou traversant (46) métallisé percé dans l'épaisseur du second élément annulaire (18) permettant de relier électriquement entre eux l'îlot (44) ménagé dans la portion de surface supérieure (26) et la portion de surface inférieure (28), **en ce que** la portion de surface inférieure (14) du premier élément annulaire (4) est portée à un même potentiel électrique que l'axe d'entraînement (10) de la première aiguille d'affichage lumineuse (1), une tranchée continue (48) ménagée dans la portion de surface supérieure (12) du premier élément annulaire (4) et électriquement isolante entourant l'axe d'entraînement (10), de façon à isoler électriquement la portion de surface supérieure (12) de l'axe d'entraînement (10), une tranchée continue (50) électriquement isolante étant ménagée dans la portion de surface inférieure (14) du premier élément annulaire (4), de manière à créer un îlot (52) électriquement isolé du reste de la portion de surface inférieure (14), un trou traversant (54) métallisé percé dans l'épaisseur du premier élément annulaire (4) permettant de relier électriquement entre eux l'îlot (52) ménagé dans la portion de surface inférieure (14) et la portion de surface supérieure (12), et **en ce que** la portion de surface inférieure (28) du second élément annulaire (18) est mise en contact électrique avec la portion de surface supérieure (12) du premier élément annulaire (4) via une pièce de contact (56) élastique électriquement conductrice disposée entre les première et seconde aiguilles d'affichage lumineuses (1 ; 2).

5. Jeu d'aiguilles d'affichage lumineuse selon la revendication 4, **caractérisé en ce que** le premier pôle (32A) de la première source de lumière (32) est relié électriquement à une première borne de la source d'alimentation (36) via la portion de surface inférieure (14) du premier élément annulaire (4) et l'axe d'entraînement (10) de la première aiguille d'affichage lumineuse (1), le second pôle (32B) de la première source de lumière (32) étant relié au premier pôle (34A) de la seconde source de lumière (34) lui-même électriquement connecté à l'îlot (44) ménagé dans la portion de surface supérieure (26) du second élément annulaire (18) via la pièce de contact (56) qui assure la continuité électrique entre la première et la seconde aiguille d'affichage lumineuse (1 ; 2), et **en ce que** le second pôle (34B) de la seconde source de lumière (34) est relié électriquement à une seconde borne de la source d'alimentation (36) via la portion de surface supérieure (26) du second élément annulaire (18) et l'axe d'entraînement (249 de la seconde aiguille d'affichage lumineuse (2).

6. Jeu d'aiguilles d'affichage lumineuses selon l'une quelconque des revendications 1 à 5, **caractérisé en ce que** les première et seconde aiguilles d'affichage lumineuses (1 ; 2) se composent chacune d'une plaque de circuit imprimé utilisée pour former les premier et second éléments annulaires (4 ; 18), et d'un guide de lumière (58 ; 60).

7. Jeu d'aiguilles d'affichage lumineuses selon la revendication 6, **caractérisé en ce que** les plaques de circuit imprimé sont métallisées dessous et dessus, mais pas sur la tranche, et **en ce que** le guide de lumière (58) est fixé sous le premier élément annulaire (4) pour former la première aiguille d'affichage lumineuse (1), tandis que le guide de lumière (60) est fixé sur le second élément annulaire (18) pour former la seconde aiguille d'affichage lumineuse (2), les première et seconde sources de lumière (32 ; 34) étant fixées sur une face d'entrée (58A ; 60A) des guides de lumière (58 ; 60).

8. Jeu d'aiguilles d'affichage lumineuses selon l'une quelconque des revendications 1 ou 2, **caractérisé en ce que** les première et seconde aiguilles d'affichage lumineuses (62 ; 64) sont réalisées d'un seul tenant, la première aiguille d'affichage lumineuse (62) comprenant une portion de surface inférieure (66) et une portion de surface supérieure (68) reliée à la portion de surface inférieure (66) par une surface latérale (70), et la seconde aiguille d'affichage lumineuse (64) comprenant une portion de surface inférieure (72) et une portion de surface supérieure (74) reliée à la portion de surface inférieure (74) par une surface latérale (76), les première et seconde aiguilles d'affichage lumineuses (62 ; 64) étant métallisées sur toutes leurs surfaces.

9. Jeu d'aiguilles d'affichage lumineuses selon la revendication 8, **caractérisé en ce que** les première et seconde aiguilles d'affichage lumineuses (62 ; 64) sont réalisées en un matériau transparent, semi-transparent ou translucide choisi dans le groupe formé par le plastique, le quartz, la silice, le saphir ou le rubis.

10. Jeu d'aiguilles d'affichage lumineuses selon l'une quelconque des revendications 8 ou 9, **caractérisé en ce que** pour chacune des première et seconde aiguilles d'affichage lumineuses (62 ; 64), une tranchée continue (78 ; 86) électriquement isolante est ménagée dans la portion de surface inférieure (66 ; 72) de la première aiguille d'affichage lumineuse (62), respectivement de la seconde aiguille d'affichage lumineuse (64), de façon à créer un îlot (80 ; 88) électriquement isolé du reste de la portion de surface inférieure (66 ; 72), la portion de surface inférieure (66 ; 72) restante étant électriquement connectée à la portion de surface supérieure (68 ; 74) via la surface latérale (70 ; 76) de la première aiguille d'affichage lumineuse (62), respectivement de la seconde aiguille d'affichage lumineuse (64), et **en ce qu'**une tranchée continue (82 ; 86) électriquement isolante ménagée dans l'îlot (80 ; 88) entoure l'axe d'entraînement (10) de la première aiguille d'affichage lumineuse (62), respectivement l'axe d'entraînement (24) de la seconde aiguille d'affichage lumineuse (64), de façon que l'îlot (80 ; 88) soit électriquement isolé de l'axe d'entraînement (10 ; 24).

11. Jeu d'aiguilles d'affichage lumineuses selon l'une quelconque des revendications 8 à 10, **caractérisé en ce que** les première et seconde sources de lumière (32 ; 34) sont fixées aux extrémités libres respectives des première et seconde aiguilles d'affichage lumineuses (62 ; 64).

12. Jeu d'aiguilles d'affichage lumineuses selon l'une quelconque des revendications 8 à 10, **caractérisé en ce que** les première et seconde sources de lumière (32 ; 34) sont fixées sous la surface des première et seconde aiguilles d'affichage lumineuses (62 ; 64) et **en ce qu'**un trou (84 ; 92) percé au voisinage du bout de la première aiguille d'affichage lumineuse (62), respectivement au voisinage du bout de la seconde aiguille d'affichage lumineuse (64), permet à la lumière produite par la source de lumière (32 ; 34) de s'échapper vers le haut en direction d'un l'observateur.

## Patentansprüche

1. Leuchtender Zeiger-Satz für einen tragbaren Gegenstand, in dem eine Quelle (36) für die Versorgung mit elektrischer Energie untergebracht ist, wobei der leuchtende Zeiger-Satz wenigstens einen ersten und einen zweiten leuchtenden Zeiger (1, 2) umfasst, die übereinander angeordnet sind und jeweils mit einem Loch (8, 22) für den Durchgang einer Antriebswelle (10, 24) versehen sind, wobei die Antriebswelle (24) des zweiten leuchtenden Zeigers (2) konzentrisch in der Antriebswelle (10) des ersten Zeigers (1) angeordnet ist, wobei zwischen die zwei Antriebswellen (10, 24) eine Isolierschicht (38) eingefügt ist, wobei der erste und der zweite leuchtende Zeiger (1, 2) eine erste bzw. eine zweite Lichtquelle (32, 34) tragen, wobei die erste und die zweite Lichtquelle (32, 34) jeweils einen ersten und einen zweiten Pol (32A, 32B; 34A, 34B) aufweisen, wobei der erste Pol (32A) der ersten Lichtquelle (32) über die Antriebswelle (10) des ersten leuchtenden Zeigers mit einem ersten Anschluss der Versorgungsquelle (36) elektrisch verbunden ist, der zweite Pol (32B) der ersten Lichtquelle (32) über ein Kontaktstück (56), das den elektrischen Durchgang zwischen dem ersten und dem zweiten leuchtenden Zeiger (1, 2) gewährleistet, mit dem ersten Pol (34A) der zweiten Lichtquelle (34) verbunden ist und der zweite Pol (34B) der zweiten Lichtquelle (34) über die Antriebswelle (24) des zweiten leuchtenden Zeigers (2) mit dem zweiten Anschluss der Versorgungsquelle (36) verbunden ist.

2. Leuchtender Zeiger-Satz nach Anspruch 1, **dadurch gekennzeichnet, dass** das Kontaktstück (56) auf der Antriebswelle (10) zentriert angeordnet ist.

3. Leuchtender Zeiger-Satz nach einem der Ansprüche 1 oder 2, **dadurch gekennzeichnet, dass** der erste und der zweite leuchtende Zeiger (1; 2) aus einem ersten bzw. einem zweiten ringförmigen Element (4; 18) gebildet sind, die durch einen Teil (6; 20) verlängert sind, der sich von einem proximalen Ende zu einem distalen Ende erstreckt, wobei das erste bzw. zweite ringförmige Element (4; 18) in ihrem Zentrum jeweils ein Loch (8; 22) für den Durchgang der Antriebswelle (10; 24) des ersten bzw. des zweiten leuchtenden Zeigers (1; 2) aufweisen, wobei das erste und das zweite ringförmige Element (4; 18) jeweils mit einem oberen Oberflächenabschnitt (12; 26), der zur Seite des Beobachters gerichtet ist, und mit einem unteren Oberflächenabschnitt (14; 28) gegenüber dem oberen Oberflächenabschnitt (12; 26) versehen sind, wobei die oberen (12; 26) und die unteren (14; 28) Oberflächenabschnitte des ersten und des zweiten ringförmigen Elements (4; 18) miteinander über eine seitliche Oberfläche (16; 30) verbunden sind, wobei die oberen (12; 26) und unteren (14; 28) Oberflächenabschnitte sowie das Loch (8; 22) des ersten und des zweiten ringförmigen Elements (4; 18) mit einer Schicht aus einem elektrisch leitenden Material beschichtet sind.

4. Leuchtender Zeiger-Satz nach Anspruch 3, **dadurch gekennzeichnet, dass** der obere Oberflächenabschnitt (26) des zweiten ringförmigen Elements (18) auf demselben elektrischen Potential wie die Antriebswelle (24) des zweiten leuchtenden Zeigers (2) gehalten wird, wobei ein durchgehender Graben (40), der in dem Abschnitt der unteren Oberfläche (28) des zweiten ringförmigen Elements (18) ausgebildet ist und elektrisch isolierend ist, die Antriebswelle (24) umgibt, in der Art, dass der untere Oberflächenabschnitt (28) von der Antriebswelle (24) elektrisch isoliert ist, ein elektrisch isolierender durchgehender Graben (42) in dem oberen Oberflächenabschnitt (26) des zweiten ringförmigen Elements (18) ausgebildet ist, derart, dass eine Insel (44) erzeugt wird, die vom Rest des oberen Oberflächenabschnitts (26) elektrisch isoliert ist, ein metallisiertes Durchgangsloch (46), das durch die Dickenabmessung des zweiten ringförmigen Elements (18) gebohrt ist, die elektrische Verbindung zwischen der in dem oberen Oberflächenabschnitt (26) ausgebildeten Insel (44) und dem unteren Oberflächenabschnitt (28) ermöglicht, dadurch, dass der untere Oberflächenabschnitt (14) des ersten ringförmigen Elements (4) auf demselben elektrischen Potential wie die Antriebswelle (10) des ersten leuchtenden Zeigers (1) gehalten wird, wobei ein durchgehender Graben (48), der in dem oberen Oberflächenabschnitt (12) des ersten ringförmigen Elements (4) ausgebildet ist und elektrisch isolierend ist, die Antriebswelle (10) umgibt, derart, dass der obere Oberflächenabschnitt (12) von der Antriebswelle (10) elektrisch isoliert ist, ein durchgehender Graben (50), der elektrisch isolierend ist, in dem unteren Oberflächenabschnitt (14) des ersten ringförmigen Elements (4) ausgebildet ist, derart, dass eine Insel (52) erzeugt wird, die vom Rest des unteren Oberflächenabschnitts (14) elektrisch isoliert ist, ein metallisiertes Durchgangsloch (54), das durch die Dickenabmessung des ersten ringförmigen Elements (4) gebohrt ist, die elektrische Verbindung zwischen der Insel (52), die in dem unteren Oberflächenabschnitt (14) ausgebildet ist, und dem oberen Oberflächenabschnitt (12) ermöglicht, und dadurch, dass der untere Oberflächenabschnitt (28) des zweiten ringförmigen Elements (18) mit dem oberen Oberflächenabschnitt (12) des ersten ringförmigen Elements (4) über ein elektrisch leitendes, elastisches Kontaktstück (56), das zwischen dem ersten und dem zweiten leuchtenden Zeiger (1; 2) angeordnet ist, in elektrischem Kontakt steht.

5. Leuchtender Zeiger-Satz nach Anspruch 4, **dadurch gekennzeichnet, dass** der erste Pol (32A) der ersten Lichtquelle (32) mit einem ersten Anschluss der Versorgungsquelle (36) über den unteren Oberflächenabschnitt (14) des ersten ringförmigen Elements (4) und die Antriebswelle (10) des ersten leuchtenden Zeigers (1) elektrisch verbunden ist, wobei der zweite Pol (32B) der ersten Lichtquelle (32) mit dem ersten Pol (34A) der zweiten Lichtquelle (34) verbunden ist, der seinerseits mit der Insel (44), die in dem oberen Oberflächenabschnitt (26) des zweiten ringförmigen Elements (18) ausgebildet ist, über das Kontaktstück (56), das den elektrischen Durchgang zwischen dem ersten und dem zweiten leuchtenden Zeiger (1; 2) gewährleistet, elektrisch verbunden ist, und dadurch, dass der zweite Pol (34B) der zweiten Lichtquelle (34) mit einem zweiten Anschluss der Versorgungsquelle (36) über den oberen Oberflächenabschnitt (26) des zweiten ringförmigen Elements (18) und die Antriebswelle (24) des zweiten leuchtenden Zeigers (2) elektrisch verbunden ist.

6. Leuchtender Zeiger-Satz nach einem der Ansprüche 1 bis 5, **dadurch gekennzeichnet, dass** der erste und der zweite leuchtende Zeiger (1; 2) jeweils aus einer Leiterplatte, die verwendet wird, um das erste und das zweite ringförmige Element (4; 18) zu bilden, und aus einem Lichtleiter (58; 60) aufgebaut sind.

7. Leuchtender Zeiger-Satz nach Anspruch 6, **dadurch gekennzeichnet, dass** die Leiterplatten unten und oben, nicht jedoch an den Seitenkanten metallisiert sind und dadurch, dass der Lichtleiter (58) unter dem ersten ringförmigen Element (4) befestigt ist, um den ersten leuchtenden Zeiger (1) zu bilden, während der Lichtleiter (60) auf dem zweiten ringförmigen Element (18) befestigt ist, um den zweiten leuchtenden Zeiger (2) zu bilden, wobei die erste und die zweite Lichtquelle (32; 34) auf einer Eintrittsfläche (58A; 60A) der Lichtleiter (58; 60) befestigt sind.

8. Leuchtender Zeiger-Satz nach einem der Ansprüche 1 oder 2, **dadurch gekennzeichnet, dass** der erste und der zweite leuchtende Zeiger (62; 64) einteilig ausgebildet sind, wobei der erste leuchtende Zeiger (62) einen unteren Oberflächenabschnitt (66) und einen oberen Oberflächenabschnitt (68), der mit dem unteren Oberflächenabschnitt (66) durch eine seitliche Oberfläche (70) verbunden ist, aufweist, und der zweite leuchtende Zeiger (64) einen unteren Oberflächenabschnitt (72) und einen oberen Oberflächenabschnitt (74), der mit dem unteren Oberflächenabschnitt (72) durch eine seitliche Oberfläche (76) verbunden ist, aufweist, wobei der erste und der zweite leuchtende Zeiger (62; 64) auf allen ihren Oberflächen metallisiert sind.

9. Leuchtender Zeiger-Satz nach Anspruch 8, **dadurch gekennzeichnet, dass** der erste und der zweite leuchtende Zeiger (62; 64) aus einem lichtdurchlässigen, halblichtdurchlässigen oder durchscheinenden Material ausgebildet sind, das aus der Gruppe gewählt ist, die gebildet ist aus Kunststoff, Quarz, Siliciumoxid, Saphir oder Rubin.

10. Leuchtender Zeiger-Satz nach einem der Ansprüche 8 oder 9, **dadurch gekennzeichnet, dass** sowohl für den ersten als auch für den zweiten leuchtenden Zeiger (62; 64) ein elektrisch isolierender durchgehender Graben (78; 86) in dem unteren Oberflächenabschnitt (66; 72) des ersten leuchtenden Zeigers (62) bzw. des zweiten leuchtenden Zeigers (64) ausgebildet ist, derart, dass eine Insel (80; 88) erzeugt wird, die vom Rest des unteren Oberflächenabschnitts (66; 72) elektrisch isoliert ist, wobei der verbleibende untere Oberflächenabschnitt (66; 72) mit dem oberen Oberflächenabschnitt (68; 74) über die seitliche Oberfläche (70; 76) des ersten leuchtenden Zeigers (62) bzw. des zweiten leuchtenden Zeigers (64) elektrisch verbunden ist und dadurch, dass ein elektrisch isolierender durchgehender Graben (82; 86), der in der Insel (80; 88) ausgebildet ist, die Antriebswelle (10) des ersten leuchtenden Zeigers (62) bzw. die Antriebswelle (24) des zweiten leuchtenden Zeigers (64) umgibt, derart, dass die Insel (80; 88) von der Antriebswelle (10; 24) elektrisch isoliert ist.

11. Leuchtender Zeiger-Satz nach einem der Ansprüche 8 bis 10, **dadurch gekennzeichnet, dass** die erste und die zweite Lichtquelle (32; 34) an freien Enden des ersten bzw. des zweiten leuchtenden Zeigers (62; 64) befestigt sind.

12. Leuchtender Zeiger-Satz nach einem der Ansprüche 8 bis 10, **dadurch gekennzeichnet, dass** die erste und die zweite Lichtquelle (32; 34) unter der Oberfläche des ersten und des zweiten leuchtenden Zeigers (62; 64) befestigt sind und dadurch, dass ein Loch (84; 92), das in der Umgebung des Endes des ersten leuchtenden Zeiger (62), bzw. des zweiten leuchtenden Zeigers (64), zweiten leuchtenden Zeigers (64) gebohrt ist, ermöglicht, dass das Licht, das durch die Lichtquelle (32; 34) erzeugt wird, nach oben in Richtung eines Beobachters austreten kann.

## Claims

1. Set of luminous display hands for a portable object which houses an electrical energy supply source (36), the set of luminous display hands including at least first and second superposed luminous display hands (1, 2) each provided with a hole (8, 22) for the passage of a drive arbour (10, 24), the drive arbour (24) of the second luminous display hand (2) being arranged concentrically inside the drive arbour (10) of the first hand (1) with insertion of an insulating layer (38) between the two drive arbours (10, 24), the first and second luminous display hands (1, 2) respectively carrying a first and a second light source (32, 34), the first and second light sources (32, 34) each including a first and a second pole (32A, 32B; 34A, 34B), the first pole (32A) of the first light source (32) being electrically connected to a first terminal of the power supply source (36) via the drive arbour (10) of the first luminous display hand (1), the second pole (32B) of the first light source (32) being connected to the first pole (34A) of the second light source (34) via a contact piece (56) which ensures electrical continuity between the first and second luminous display hands (1, 2), and the second pole (34B) of the second light source (34) being connected to the second terminal of the power supply source (36) via the drive arbour (24) of the second luminous display hand (2).

2. Set of luminous display hands according to claim 1, **characterized in that** the contact piece (56) is centred on the drive arbour (10).

3. Set of luminous display hands according to claims 1 or 2, **characterized in that** each of the first and second luminous display hands (1; 2) is respectively formed of a first and a second annular element (4; 18) extended by a portion (6; 20) which extends from a proximal end to a distal end, the first and second annular elements (4; 18) respectively each having at the centre thereof a hole (8; 22) for the passage of the drive arbour (10; 24) of the first and second luminous display hands (1; 2) respectively, the first and second annular elements (4; 18) each being provided with an upper surface portion (12; 26) facing an observer, and a lower surface portion (14; 28) opposite the upper surface portion (12; 26), the upper (12; 26) and lower (14; 28) surface portions of the first and second annular elements (4; 18) being connected to each other by a lateral surface (16; 30), the upper (12; 26) and lower (14; 28) surface portions and the hole (8; 22) in the first and second annular elements (4; 18) being coated with a layer of electrically conductive material.

4. Set of luminous display hands according to claim 3, **characterized in that** the upper surface portion (26) of the second annular element (18) is brought to a same electrical potential as the drive arbour (24) of the second luminous display hand (2), an electrically insulating continuous trench (40), arranged in the lower surface portion (28) of the second annular element (18), surrounding the drive arbour (24), so as to electrically insulate the lower surface portion (28) from the drive arbour (24), an electrically insulating continuous trench (42) being arranged in the upper surface portion (26) of the second annular element (18), so as to create an island (44) electrically insulated from the rest of the upper surface portion (26), a metallized through hole (46) made in the thickness of the second annular element (18) making it possible to electrically connect to each other the island (44) arranged in the upper surface portion (26) and the lower surface portion (28), **in that** the lower surface portion (14) of the first annular element (4) is brought to a same electrical potential as the drive arbour (10) of the first luminous display hand (1), an electrically insulating continuous trench (48), arranged in the upper surface portion (12) of the first annular element (4), surrounding the drive arbour (10) so as to electrically insulate the upper surface portion (12) from the drive arbour (10), an electrically insulating continuous trench (50) being arranged in the lower surface portion (14) of the first annular element (4), so as to create an island (52) electrically insulated from the rest of the lower surface portion (14), a metallized through hole (54) pierced in the thickness of the first annular element (4) making it possible to electrically connect to each other the island (52) arranged in the lower surface portion (14) and the upper surface portion (12), and **in that** the lower surface portion (28) of the second annular element (18) is placed in electrical contact with the upper surface portion (12) of the first annular element (4) via an elastic electrically conductive contact piece (56) disposed between the first and second luminous display hands (1; 2).

5. Set of luminous display hands according to claim 4, **characterized in that** the first pole (32A) of the first light source (32) is electrically connected to a first terminal of the power supply source (36) via the lower surface portion (14) of the first annular element (4) and the drive arbour (10) of the first luminous display hand (1), the second pole (32B) of the first light source (32) being connected to the first pole (34A) of the second light source (34) which is in turn electrically connected to the island (44) arranged in the upper surface portion (26) of the second annular element (18) via the contact piece (56) which ensures electrical continuity between the first and second luminous display hands (1; 2), and **in that** the second pole (34B) of the second light source (34) is electrically connected to a second terminal of the power supply source (36) via the upper surface portion (26) of the second annular element (18) and the drive arbour (24) of the second luminous display hand (2).

6. Set of luminous display hands according to any of claims 1 to 5, **characterized in that** the first and second luminous display hands (1; 2) are each formed of a printed circuit board, used to form the first and second annular elements (4; 18), and of a light guide (58; 60).

7. Set of luminous display hands according to claim 6, **characterized in that** the printed circuit boards are metallized on the top and bottom, but not on the edge, and **in that** the light guide (58) is fixed under the first annular element (4) to form the first luminous display hand (1), whereas the light guide (60) is fixed onto the second annular element (18) to form the second luminous display hand (2), the first and second light sources (32, 34) being fixed onto an entry face (58A; 60A) of the light guides (58; 60).

8. Set of luminous display hands according to claims 1 or 2, **characterized in that** the first and second luminous display hands (62, 64) are made in one piece, the first luminous display hand (62) including a lower surface portion (66) and an upper surface portion (68) connected to the lower surface portion (66) by a lateral surface (70), and the second luminous display hand (64) including a lower surface portion (72) and an upper surface portion (74) connected to the lower surface portion (74) by a lateral surface (76), the first and second luminous display hands (62; 64) being metallized on all surfaces.

9. Set of luminous display hands according to claim 8, **characterized in that** the first and second luminous display hands (62; 64) are made of a transparent, semi-transparent or translucent material selected from the group formed by plastic, quartz, silica, sapphire and ruby.

10. Set of luminous display hands according to any of claims 8 or 9, **characterized in that**, for each of the first and second luminous display hands (62; 64), a continuous electrically insulating trench (78; 86) is arranged in the lower surface portion (66; 72) of the first luminous display hand (62) and second luminous display hand (64) respectively, so as to create an island (80; 88) electrically insulated from the rest of the lower surface portion (66; 72), the lower surface portion (66; 72) remaining electrically connected to the upper surface portion (68; 74) via the lateral surface (70; 76) of the first luminous display hand (62) or second luminous display hand (64) respectively, and **in that** a continuous electrically insulating trench (82; 86) arranged in the island (80; 88) surrounds the drive arbour (10) of the first luminous display hand (62), respectively the drive arbour (24) of the second luminous display hand (64), so that the island (80; 88) is electrically insulated from the drive arbour (10; 24).

11. Set of luminous display hands according to any of claims 8 to 10, **characterized in that** the first and second light sources (32; 34) are fixed to the respective free ends of the first and second luminous display hands (62; 64).

12. Set of luminous display hands according to any of claims 8 to 10, **characterized in that** the first and second light sources (32; 34) are fixed under the surface of the first and second luminous display hands (62; 64) and **in that** a hole (84; 92) made in proximity respectively to the end of the first luminous display hand (62) or the second luminous display hand (64), allows the light produced by the light source (32, 34) to escape upwards towards the observer.
